# FASCICULE DE BREVET EUROPEEN

(11) **EP 3 002 154 B1**
(45) Date de publication et mention de la délivrance du brevet: **11.11.2020**
(21) Numéro de dépôt: 15187448.4
(22) Date de dépôt: 29.09.2015
(51) Int. Cl.: B60Q 1/38, B60Q 1/26, F21S 43/249, B60Q 1/28, F21S 43/15, F21S 43/14, F21S 43/237, F21S 43/245, F21V 5/02, F21Y 103/20, F21W 103/20, F21Y 115/10, F21Y 113/13, F21Y 103/10, F21Y 105/10, F21V 8/00

(54) **SYSTÈME OPTIQUE POUR VÉHICULE AUTOMOBILE**
OPTISCHES SYSTEM FÜR KRAFTFAHRZEUG
OPTICAL SYSTEM FOR A MOTOR VEHICLE

(30) Priorité: 30.09.2014 FR 1459267
(43) Date de publication de la demande: 06.04.2016
(73) Titulaire: VALEO VISION, 93012 Bobigny Cedex (FR)
(72) Inventeur: DUBOSC, Christophe, 93250 VILLEMOMBLE (FR)

(56) Documents cités:
- EP-A2- 2 592 333
- EP-A2- 2 596 992
- WO-A1-2014/105470
- DE-A1- 10 022 420
- DE-A1- 10 207 694
- DE-U1-202010 004 777
- JP-A- 2008 147 032

## Description

L'invention concerne un système optique d'émission lumineuse pour véhicule.

Les systèmes lumineux équipant les véhicules sont par exemple utilisés pour améliorer la visibilité des environs du véhicule, signifier la présence du véhicule aux autres usagers de la route, indiquer que le véhicule est en train de freiner ou encore signifier une intention de changer la direction de déplacement du véhicule.

WO 2014/105470 A1 décrit un feu arrière pour véhicule automobile comprenant des groupes de diodes électroluminescentes et un guide de lumière. Un de ces groupes, éclairé de manière séquentielle, permet de réaliser une fonction d'indication de direction. D'autres groupes de diodes permettent respectivement de réaliser les fonctions feu stop, feu de recul et feu de position.

Dans les systèmes modernes plus particulièrement utilisés pour cette dernière fonction, il est courant que la source de lumière utilisée pour générer le faisceau lumineux visualisable par les gens aux alentours se présente sous la forme d'une pluralité de sources lumineuses.

Ce genre de configuration présente un inconvénient important: le rendu lumineux obtenu à partir de cette pluralité de sources exhibe à son tour un certain nombre de tâches lumineuses correspondant chacune au faisceau émis par l'une des sources de lumière, ce qui n'est pas souhaitable.

En outre, certaines normes imposent que le clignotement de ces systèmes observe un fonctionnement dit « traceur » qui consiste en un allumage séquentiel de plusieurs sources de lumières au cours d'un laps de temps prédéterminé.

Or l'observation de cette contrainte par les systèmes connus rend difficile l'obtention d'un aspect allumé continu de ces derniers.

Aussi, l'invention vient améliorer la situation.

A cet effet, l'invention concerne un système optique d'émission lumineuse pour véhicule automobile, ledit système optique est défini dans la revendication 1 et comprend :
- un premier sous-système d'émission lumineuse comprenant un premier ensemble de sources lumineuses configuré pour émettre de la lumière, et
- un deuxième sous-système d'émission lumineuse, comprenant un deuxième ensemble de sources lumineuses configuré pour émettre de la lumière et un guide de lumière apte à diffuser hors du système optique ladite lumière desdites sources lumineuses du deuxième ensemble de sources lumineuses.

En particulier, le guide de lumière est agencé en regard du premier ensemble de sources lumineuses de sorte que le premier ensemble de sources lumineuses rayonne essentiellement à travers ledit guide de lumière hors du système optique.

Ce passage des faisceaux lumineux émis par les sources du premier ensemble a pour effet de mélanger et homogénéiser la lumière émise par les différentes sources lumineuses du dispositif, et ce pour une large plage d'angles d'observation du système selon l'invention. Ainsi, la configuration des sources, notamment leur éventuel caractère ponctuel, leur disposition spatiale, etc., n'est que peu voire pas manifeste à la vue du rendu lumineux global du système. Ce rendu est en donc amélioré d'autant.

Avantageusement, le guide de lumière présente deux faces d'extrémité longitudinale séparées par au moins une face périphérique. Le cas échéant, l'une des faces d'extrémité longitudinale forme une face d'entrée de lumière associée au deuxième ensemble de sources lumineuses, cette lumière se propageant par réflexion interne totale dans le guide de lumière jusqu'à une face de sortie de lumière disposée sur ladite face périphérique. En particulier, le guide de lumière peut être un guide de lumière de type généralement cylindrique.

Avantageusement, le premier ensemble de sources lumineuses s'étend en regard du guide de lumière sensiblement le long de la face périphérique du guide, d'un côté du guide opposé à la face de sortie, le deuxième ensemble de sources lumineuses étant disposé à ladite face d'entrée de lumière. On comprend que, selon l'invention, la lumière émise par le premier ensemble de sources lumineuse traverse le guide de manière transversale, c'est-à-dire en entrant dans le guide via un côté de la face périphérique opposé à la face de sortie et en sortant via la face de sortie. Grâce à l'invention, cette face de sortie est une face de sortie à la fois pour la lumière du premier ensemble de sources lumineuses et pour celle du second ensemble. Si on le souhaite, une glace de fermeture peut être disposée devant la face de sortie du guide.

Avantageusement, le deuxième sous-système est agencé pour que, lorsque les sources lumineuses du deuxième ensemble émettent de la lumière, le faisceau émis via la face de sortie du guide réalise une fonction réglementaire d'indicateur de direction. Le cas échéant, le deuxième ensemble de sources lumineuses comprend une ou plusieurs sources lumineuses aptes à émettre de la lumière de couleur ambre.

Selon un autre aspect de l'invention, le premier sous-système est adapté pour réaliser une sous-fonction de la dite fonction d'indicateur de direction, ladite sous-fonction étant connue sous le nom de fonction traceur et consistant en un allumage séquentiel de plusieurs sources lumineuses se déroulant sur un intervalle de durée prédéfinie. Le cas échéant, le deuxième ensemble de sources lumineuses comprend une ou plusieurs sources lumineuses aptes à émettre de la lumière de couleur ambre.

Selon un autre aspect de l'invention, le guide de lumière comprend des moyens de déviation configurés pour modifier la direction de propagation de la lumière émise par le deuxième ensemble de sources lumineuses et se propageant le long du guide de lumière.

De la sorte, la disposition relative du guide de lumière et du premier ensemble de sources lumineuses n'est pas contraignante pour le rayonnement que l'on souhaite obtenir via le deuxième ensemble de sources lumineuses.

Dans une réalisation particulière, le premier ensemble de sources lumineuses est configuré pour émettre de la lumière selon une direction principale d'émission, les moyens de déviation étant configurés pour réorienter la lumière émise par le deuxième ensemble de sources lumineuses se propageant le long du guide de lumière sensiblement selon ladite direction principale d'émission. Ceci permet notamment d'obtenir une homogénéité améliorée selon cette direction principale d'émission
Dans un mode de réalisation, les moyens de déviation comprennent des prismes de déviation, par exemple formés dans l'épaisseur du guide de lumière ou sur une surface dudit guide de lumière. Cette fonction de déviation lumineuse est ainsi réalisée de manière simple tout en permettant de ne pas impacter la lumière issue du premier ensemble de sources lumineuses.

Selon un autre aspect de l'invention, le système comprend un boîtier délimitant une cavité ouverte, le boîtier comprenant une portion sur laquelle le premier ensemble de sources lumineuses est agencée de sorte que ledit premier ensemble de sources lumineuses soit situé en regard d'une ouverture de la cavité. Le cas échéant, les parois intérieures du boîtier peuvent être diffusantes, par exemple en étant revêtues d'une peinture blanche diffusante.

Dans une réalisation particulière, le système comprend en outre une glace de fermeture diffusante obturant ladite cavité. Par exemple, la glace de fermeture peut être translucide.

En variante, le système peut comprendre des moyens de diffusion, comme des collimateurs ou des réflecteurs, de la lumière émise par le premier ensemble de sources lumineuses vers le guide de lumière.

Selon un autre aspect de l'invention, le système comprend en outre au moins une source lumineuse déportée par rapport au guide de lumière de sorte que la ou chaque dite source lumineuse ne rayonne pas essentiellement à travers ledit guide de lumière.

Ceci permet de disposer de sources lumineuses autorisant la personnalisation du rendu lumineux global du système.

Dans une réalisation particulière, le système comprend en outre un dispositif de commande des premier et deuxième ensembles de sources lumineuses.

Selon l'invention, le dispositif de commande est adapté pour commander les premier et deuxième ensembles de sources lumineuses selon une première séquence dans laquelle tout ou partie des sources lumineuses du premier ensemble sont séquentiellement allumées selon un premier ordre d'allumage prédéfini puis éteintes, notamment simultanément, et tout ou partie des sources lumineuses du deuxième ensemble sont allumées en réponse à l'extinction, notamment à l'extinction simultanée, des sources lumineuses du premier ensemble.

Ceci permet de disposer d'un mode d'émission des sources lumineuses présentant une homogénéisation optimale.

Dans un mode de réalisation, le dispositif de commande est adapté pour commander les premier et deuxième ensembles de sources lumineuses selon une deuxième séquence dans laquelle :
- tout ou partie des sources lumineuses du premier ensemble sont séquentiellement allumées selon un deuxième ordre d'allumage prédéfini,
- la puissance lumineuse émise par tout ou partie des sources lumineuses du premier ensemble est diminuée à l'issue de l'allumage des sources lumineuses du premier ensemble selon ledit deuxième ordre d'allumage, et
- tout ou partie des sources lumineuses du deuxième ensemble sont allumées à l'issue de l'allumage des sources lumineuses du premier ensemble selon ledit deuxième ordre d'allumage.

Ceci permet de disposer d'un mode d'émission à haute puissance lumineuse et excellente homogénéité.

Selon un autre aspect de l'invention, le dispositif de commande est adapté pour commander les premier et deuxième ensembles de sources lumineuses selon une troisième séquence dans laquelle :
- tout ou partie des sources lumineuses du premier ensemble sont séquentiellement allumées selon un troisième ordre d'allumage prédéfini, et
- tout ou partie des sources lumineuses du deuxième ensemble sont allumées à l'issue de l'allumage des sources lumineuses du premier ensemble selon ledit troisième ordre d'allumage.

Ceci permet de disposer d'un mode d'émission de puissance lumineuse augmentée.

Selon un aspect de l'invention, le deuxième ensemble de sources lumineuses du deuxième sous-système comprend une ou plusieurs sources lumineuses aptes à émettre de la lumière de couleur blanche.

Si on le souhaite, toutes les sources lumineuses du deuxième ensemble sont disposées sur un même support, par exemple une carte de circuit imprimé. Par exemple, il peut s'agir d'éléments photoémissifs à semi-conducteurs adaptés pour générer des rayons lumineux par photoluminescence. Ces éléments peuvent chacun être réalisé par une diode électroluminescente. En variante, les éléments peuvent être chacun formé par une puce d'une même diode électroluminescente dite multi-puces.

Dans une réalisation particulière, le système présente un premier mode de fonctionnement dans lequel le système optique réalise une fonction de clignotement lumineux, et un deuxième mode de fonctionnement d'éclairage diurne, dans lequel une ou plusieurs desdites sources lumineuses du deuxième ensemble de sources lumineuses aptes à émettre de la lumière de couleur blanche sont allumées.

Dans une réalisation particulière, dans le deuxième mode de fonctionnement, une ou plusieurs desdites sources lumineuses du deuxième ensemble de sources lumineuses aptes à émettre de la lumière de couleur blanche sont allumées pour émettre un faisceau présentant une première intensité lumineuse, par exemple en étant alimentées avec une première puissance électrique, le système d'émission lumineuse comprenant en outre un troisième mode de fonctionnement d'éclairage de position, dans lequel une ou plusieurs desdites sources lumineuses du deuxième ensemble de sources lumineuses aptes à émettre de la lumière de couleur blanche sont allumées pour émettre un faisceau présentant une deuxième intensité lumineuse inférieure à la première intensité lumineuse, par exemple en étant alimentées avec une deuxième puissance électrique inférieure à la première puissance électrique.

L'invention sera mieux comprise à la lecture de la description détaillée qui va suivre, donnée uniquement à titre d'exemple et faite en référence aux Figures annexées, sur lesquelles :
- Les Figures 1 à 3 sont des vues de face d'un système optique selon l'invention,
- Les Figures 4a et 4b sont des illustrations respectivement d'une section transversale et d'une section longitudinale d'un guide de lumière du système optique des Figures 2 et 3 ; et
- La Figure 5 illustre un procédé d'utilisation du système optique des Figures 1 à 3.

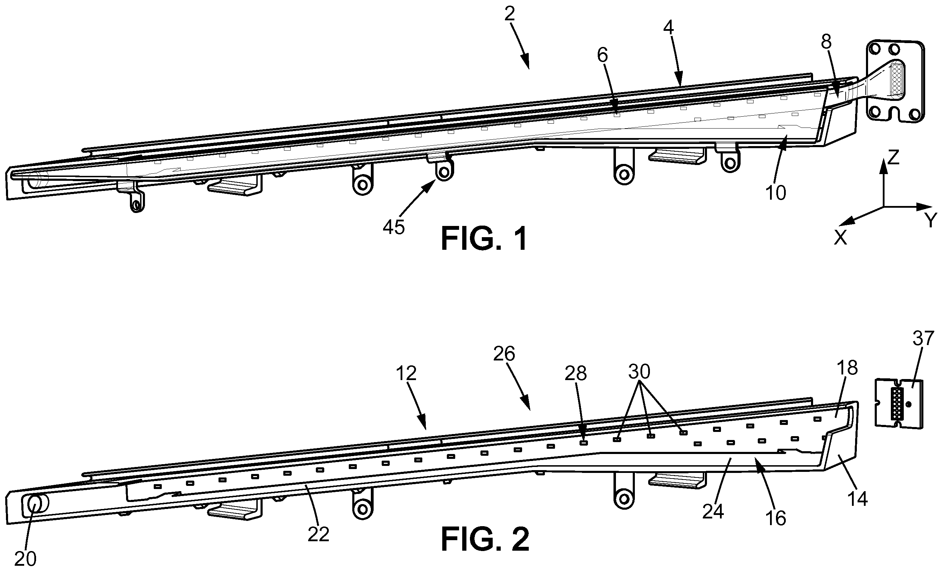

La Figure 1 illustre un système optique 2 d'émission lumineuse selon l'invention, ci-après système 2. La Figure 1 est repérée par un trièdre XYZ.

Le système 2 est destiné à équiper un véhicule automobile. Le système 2 est configuré pour réaliser une fonction d'éclairage externe du véhicule. En particulier, le système 2 présente :
- un premier mode de fonctionnement de clignotement lumineux. Ce premier mode de fonctionnement est par exemple mis en œuvre pour l'indication d'un changement de direction dudit véhicule ou pour l'indication d'une situation de détresse ;
- un deuxième mode de fonctionnement d'éclairage diurne ; et
- un troisième mode de fonctionnement d'éclairage de position.

Ces modes de fonctionnement sont détaillés ci-après.

En pratique, le système 2 est préférentiellement un système communément connu sous le nom de « clignotant », et qui peut servir à indiquer que le véhicule s'apprête à changer de direction, à participer à l'indication d'une situation de détresse, à réaliser l'éclairage de position, etc.

Le système 2 est par exemple agencé à l'avant ou à l'arrière du véhicule et est au contact de l'environnement extérieur.

Le système 2 est configuré pour émettre un faisceau lumineux selon une direction principale d'émission correspondant à l'axe X du trièdre XYZ. Dans une configuration dans laquelle le système 2 est intégré à un véhicule, cette direction X est orientée à l'écart du véhicule.

Le système 2 comprend un boîtier 4, un premier sous-système 6 d'émission lumineuse, un deuxième sous-système 8 et une glace de fermeture 10.

En référence à la Figure 2, le boîtier 4 comprend une portion arrière 12, une portion latérale 14 et un plancher 16.

La portion arrière 12 est sensiblement verticale (au sens de l'orientation de la Figure 2) et délimite sur sa face interne une gorge horizontale allongée surplombée par une lèvre. La portion latérale 14 est bordée à l'une de ses extrémités par la portion latérale 14 et présente un orifice de passage 18 à son autre extrémité.

La portion latérale 14 est sensiblement verticale et se présente sous la forme d'une paroi munie d'un évidement 20. Comme décrit ci-après, le passage 18 et l'évidement 20 permettent le passage d'un organe du deuxième sous-système 8, comme décrit ci-après.

Le plancher 16 délimite une lèvre 22 bordant la portion arrière 12 sur une partie de sa longueur, et délimité une avancée 24 au voisinage de la paroi latérale 14.

Le boîtier 4 délimité une cavité 26 ouverte vers l'avant et le haut. Comme illustré sur la Figure 1, cette cavité 26 est destinée à être obturée par la glace de fermeture 10.

Préférentiellement, les surfaces internes des organes du boîtier 4 sont réfléchissantes, ce qui permet de maximiser la puissance lumineuse émise par le système 2. En variante, les parois intérieures du boîtier sont diffusantes. A cet effet, elles sont par exemple revêtues d'une peinture blanche diffusante.

Le premier sous-système 6 est notamment adapté pour réaliser une sous-fonction de la fonction de clignotement lumineux, cette sous-fonction étant connue sous le nom de « fonction tracer », qui signifie traceur. Cette fonction consiste en un allumage séquentiel de plusieurs sources lumineuses se déroulant sur un intervalle de durée prédéfinie. Cette durée est par exemple prescrite par une norme.

Toujours en référence à la Figure 2, le premier sous-système 6 comprend un ensemble 28 de sources lumineuses 30, ci-après premier ensemble 28. Les sources lumineuses 30 sont agencées sur la face interne de la portion arrière 12 du boîtier 4. Les sources lumineuses 30 sont ainsi agencées en regard de l'ouverture avant de la cavité 26. Les sources lumineuses 30 présentent une direction principale d'émission correspondant sensiblement à la direction d'émission X du système 2.

Préférentiellement, les sources lumineuses 30 sont agencées sur la portion arrière 12 selon un agencement matriciel, c'est-à-dire en lignes et en colonnes. Préférentiellement, les lignes de l'agencement des sources lumineuses 30 sont sensiblement horizontales, et les colonnes sensiblement verticales (au sens de l'orientation des Figure 1 à 3). Cet agencement permet notamment la satisfaction de certaines prescriptions prévues par des normes en matière de feux clignotants.

Dans l'exemple des Figures 1 à 3, l'agencement des sources lumineuses 30 du premier ensemble 28 comprend une unique ligne. En outre, la distance séparant deux sources lumineuses 30 consécutives est comprise entre 10 mm et 30 mm, et vaut par exemple sensiblement 20 mm.

Préférentiellement, les sources lumineuses 30 sont sensiblement ponctuelles. Par exemple, les sources lumineuses 30 sont des éléments photoémissifs à semi-conducteurs adaptés pour générer des rayons lumineux par photoluminescence tels que des diodes électroluminescentes. En outre, les sources lumineuses 30 sont adaptées pour émettre des faisceaux lumineux de couleur ambre ou blanche.

Le deuxième sous-système 8 est adapté pour mettre en œuvre la fonction de clignotement lumineux conjointement au première sous-système 6, ainsi qu'à homogénéiser la lumière émise par le système 2 de façon générale.

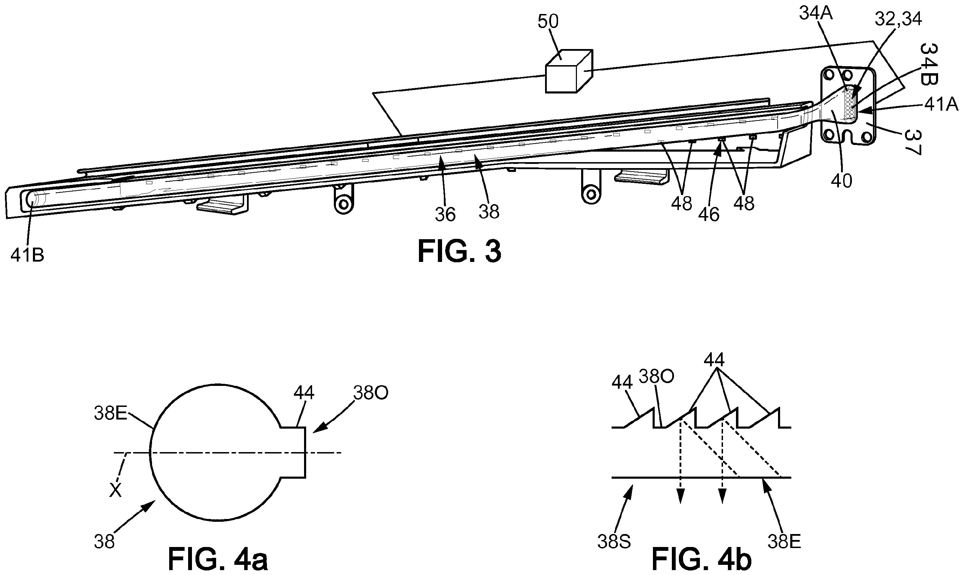

En référence à la Figure 3, le deuxième sous-système 8 comprend un deuxième ensemble 32 de sources lumineuses 34 et un guide de lumière 36.

Le deuxième ensemble 32 de sources lumineuses 34 se situe à l'extérieur du boîtier 4. Par exemple, ces sources 34 sont fixées sur une paroi du véhicule à proximité du système 2.

Par exemple, les sources lumineuses 34 sont des éléments photoémissifs à semi-conducteurs adaptés pour générer des rayons lumineux par photoluminescence tels que des diodes électroluminescentes. En outre, par exemple,-les sources lumineuses 34 sont toutes disposées sur un même support, par exemple une carte de circuit imprimé. Dans les modes de réalisation tels que celui de la Figure 3, les sources lumineuses 34 du deuxième ensemble 32 sont regroupées sur un même circuit imprimé 37 (Figure 2). Le circuit imprimé 37 est situé à l'extérieur du boîtier, et est par exemple fixé à une paroi du véhicule auquel le système 2 est intégré.

Par ailleurs, les sources lumineuses 34 peuvent chacune être réalisées par une diode électroluminescente. En variante, les sources lumineuses 34 peuvent être chacune formée par une puce d'une même diode électroluminescente dite multi-puces.

Le deuxième sous-système 8 est adapté pour réaliser une fonction réglementaire d'indication de direction. Cette fonction est par exemple mise en œuvre lors du premier mode de fonctionne du système 2.

A cet effet, les sources lumineuses 34 comprennent au moins une source lumineuse 34A adaptée pour émettre de la lumière de couleur ambre. En outre, le deuxième sous-système 8 est adapté pour réaliser une fonction d'éclairage diurne connue sous le nom anglophone de « Daytime Running Light » (qui signifie éclairage diurne). Cette fonction est mise en œuvre lors du deuxième mode de fonctionnement du système 2.

A cet effet, les sources lumineuses 34 comprennent au moins une source lumineuse adaptée pour émettre un faisceau lumineux de couleur blanche. Lors de la mise en œuvre de cette fonction, au moins l'une des sources lumineuses 34B de couleur blanche est allumée.

Les sources lumineuses 34 du deuxième ensemble 32 présentent une orientation quelconque par rapport à la direction d'émission X. En pratique, cette orientation est conditionnée par l'orientation de la paroi sur laquelle ces sources 34 sont agencées.

Le guide de lumière 36 est réalisé à partir d'un matériau présentant de bonnes propriétés de guidage de la lumière. Par exemple, le guide de lumière 36 est réalisé à partir de polyméthacrylate de méthyle, d'acronyme PMMA, ou encore de Polycarbonate, d'acronyme PC.

Le guide de lumière 36 est configuré pour guider la lumière émise par le deuxième ensemble 32 de sources lumineuses 34 et homogénéiser la lumière émise par le système 2.

Toujours en référence à la Figure 3, le guide de lumière 36 présente une portion principale 38 et une portion de connexion 40 encadrées de part et d'autre par deux extrémités longitudinales 41A, 41B.

La portion principale 38 présente une forme générale cylindrique. La portion principale 38 est reçue à l'une de ses extrémités dans l'évidement 18 de la paroi latérale 12 du boîtier 4, et à son autre extrémité dans le passage 20 de la portion arrière. La portion principale 38 s'étend en regard et à proximité des sources lumineuses 30 du premier ensemble 28, de sorte que les sources lumineuses 30 du premier ensemble 28 rayonnent essentiellement à travers la portion principale 38 du guide de lumière 36. Par « essentiellement », on entend ici que la majeure partie des faisceaux lumineux émis par les sources 30 passe au travers du guide de lumière. Seule une petite partie des faisceaux, par exemple certains faisceaux émis avec un angle d'élévation important par rapport à la direction d'émission X, étant susceptible de sortir du système 2 sans être passé au travers du guide de lumière 36. En pratique, au moins la partie de la portion principale 38 en regard du premier ensemble 28 de sources lumineuses 30 s'étend selon l'axe Y.

Ce passage des faisceaux lumineux émis par le premier sous-système 6 au travers du guide de lumière 36 a pour effet de mélanger et homogénéiser la lumière émise par les deux sous-systèmes. Ainsi, la configuration des sources lumineuses 30, 34 est « gommée », de sorte que la configuration des sources lumineuses 30, 34 dont leur caractère ponctuel, leur espacement relatif, etc. est moins voire pas visible après le passage des faisceaux lumineux au travers et le long du guide de lumière 36.

La portion principale 38 présente une surface externe 38S formant une face périphérique du guide de lumière 36. Cette face périphérique 38S présente une face de sortie de lumière 38E correspondant à la face du guide de lumière à travers laquelle est émise la lumière issue des premier et deuxième ensembles 28, 32. La portion principale 38 comprend en outre une face 380 opposée à ladite face de sortie 38E. Cette face 380 est orientée en direction de la portion arrière 12 du boîtier et des sources lumineuses 30 du premier ensemble 28.

La portion de connexion 40 est connectée d'une part à la portion principale 38 et d'autre part au deuxième ensemble 32 de sources lumineuses 34. Ainsi, les faisceaux lumineux émis par les sources lumineuses 34 pénètrent dans le guide de lumière 36 et se propagent le long de la portion principale 38.

L'extrémité longitudinale 41A située du côté de la portion de connexion 40 forme une face d'entrée de la lumière dans le guide de lumière 36. Cette face d'entrée permet ainsi l'entrée de la lumière émise par le deuxième ensemble 32 de sources lumineuses 34 dans le guide de lumière 36.

En référence aux Figure 4a et 4b, qui illustrent une section transverse, respectivement longitudinale de la portion principale 38 du guide de lumière 36, le guide de lumière 36 comprend des moyens de déviation 44 configurés pour modifier la direction de propagation des faisceaux lumineux se propageant dans le guide de lumière 36. Plus particulièrement, les moyens de déviation 44 sont configurés pour réorienter les faisceaux lumineux se propageant dans le guide de lumière 36 sensiblement selon la direction d'émission X du système 2.

Par exemple, les moyens de déviation 44 se présentent sous la forme de prismes de déviation 44 ménagés sur la face 380 opposée à la face de sortie 38E. Les prismes de déviation 44 font saillie en direction des sources lumineuses 30 du premier ensemble 28.

En variante, les prismes de déviation 44 sont ménagés dans l'épaisseur du guide 36 et présentent une forme et un emplacement adaptés pour réorienter la direction des faisceaux lumineux selon la direction X.

Préférentiellement, les moyens de déviation 44 sont également configurés pour ne pas modifier ou modifier faiblement la direction de propagation des faisceaux lumineux émis par les sources lumineuses 30 du premier ensemble 28 lors de leur passage à travers le guide de lumière. De fait, le guide de lumière 36 ne perturbe que peu l'émission lumineuse du premier ensemble 28.

La glace de fermeture 10 est réalisée à partir d'un matériau transparent. Par exemple, la glace de fermeture 10 est réalisée à partir de Polycarbonate ou de Polyméthacrylate de méthyle. Par exemple, la glace de fermeture 10 est incolore.

Dans certains modes de réalisation, la glace de fermeture 10 est également configurée pour diffuser la lumière.

La glace de fermeture 10 est configurée pour ne pas modifier les propriétés des faisceaux lumineux la traversant. Alternativement, la glace de fermeture 10 est configurée pour améliorer plus avant l'homogénéité du faisceau lumineux émis par le système 2. Par exemple, à cet effet, la glace de fermeture 10 présente des prismes optiques sur au moins l'une de ses faces, par exemple la face interne, ou encore un grainage.

Comme indiqué précédemment, la glace de fermeture 10 est configurée pour obturer la cavité 26 délimitée par le boîtier 4. A cet effet, la glace de fermeture 10 présente une portion supérieure dont la forme est analogue à la forme du plancher 16 du boîtier 4 et une portion avant sensiblement verticale. En outre, la glace de fermeture 10 est fixée au boîtier 4. Cette fixation est par exemple réalisée par soudure ou par collage.

En référence à la Figure 3, préférentiellement, le système 2 comprend également un troisième ensemble 46 de sources lumineuses 48 adaptées pour émettre de la lumière hors du système 2.

Les sources lumineuses 48 de ce troisième ensemble 46 sont déportées par rapport au guide de lumière 36 de sorte qu'elles ne rayonnent pas essentiellement au travers du guide de lumière. En d'autres termes, la majeure partie des faisceaux lumineux émis par ces sources 48 ne passent pas au travers du guide de lumière.,

Par exemple, les sources lumineuses 48 sont disposées sur la paroi arrière 12 à proximité de la paroi latérale 14, par exemple sur une ligne décalée verticalement par rapport au guide de lumière 36.

Ces sources lumineuses 48 permettent de générer un faisceau lumineux résultant non homogénéisé venant se superposer aux faisceaux résultants des premier et deuxième sous-systèmes. Ceci permet une personnalisation du rendu visuel global du système 2. La disposition relative des sources lumineuses 48 entre elles et par rapport au guide de lumière est choisie en fonction du rendu lumineux souhaité.

Toujours en référence à la Figure 3, le système 2 comprend également un dispositif de commande 50.

Le dispositif de commande 50 est connecté aux premier, deuxième et troisième ensembles 28, 32, 46 et est configuré pour commander les différentes sources lumineuses 30, 34, 48, en particulier leur allumage, leur extinction et la puissance lumineuse qu'ils émettent.

Notamment, le dispositif de commande 50 est configuré pour sélectionner la mise en œuvre du premier mode de fonctionnement dans lequel la fonction de clignotement lumineux est mise en œuvre via l'émission lumineuse du premier sous-système et du deuxième sous-système 8, du deuxième mode de fonctionnement d'éclairage diurne dans lequel une ou plusieurs des sources lumineuses 34 du deuxième ensemble 32 adaptées pour émettre un faisceau lumineux blanc sont allumées, et du troisième mode de fonctionnement dans lequel une ou plusieurs des sources lumineuses 34B aptes à émettre de la lumière de couleur blanche sont allumées mais rayonnent avec une puissance moindre que celle utilisée dans le deuxième mode de fonctionnement.

En outre, le dispositif de commande 50 est adapté pour commander les premier et deuxième ensembles 28, 32 selon une première séquence S1 au cours de laquelle tout ou partie des sources lumineuses 30 du premier ensemble 28 sont séquentiellement allumées selon un premier ordre d'allumage prédéfini puis éteintes, par exemple simultanément, et tout ou partie des sources lumineuses 34 du deuxième ensemble 32 sont allumées en réponse à l'extinction des sources lumineuses 30 du premier ensemble 28.

Cette séquence S1 est préférentiellement mise en œuvre dans le premier mode de fonctionnement du système 2 pour le clignotement lumineux.

Le premier ordre d'allumage prédéfini correspond par exemple à un allumage séquentiel des différentes sources 30 du premier ensemble en démarrant d'une source lumineuse 30 d'extrémité ou bien d'une colonne de sources lumineuses d'extrémité et en parcourant les sources lumineuses 30 ou les colonnes de sources lumineuses 30 en direction de l'autre extrémité. Par exemple, l'extrémité par laquelle l'allumage démarre correspond à l'extrémité intérieure du système 2 au sens de sa disposition au sein du véhicule. Par exemple, dans un cas de figure où la paroi latérale 14 est orientée vers l'axe médian du véhicule, la première source lumineuse 30 allumée sera celle la plus proche de la paroi latérale 14, et inversement du côté du passage 30 dans le cas de figure opposé.

Par exemple, l'allumage des sources lumineuses 30 selon le premier ordre d'allumage se déroule en quelques dixièmes de seconde, par exemple deux dixièmes de seconde.

La séquence S1 est par exemple suivie d'une temporisation d'une durée d'environ 0,33 seconde au cours de laquelle le système 2 n'émet pas de lumière, suite à quoi cette séquence S1 est réitérée. En pratique, la séquence S1 est construite pour répondre aux exigences prescrites par des normes en matière de clignotement lumineux pour véhicule destiné à circuler sur route. Certaines de ces normes prévoient notamment que l'allumage initial se déroule sur une durée correspondant sensiblement à 0,2 s, et que la phase allumée (incluant donc l'allumage initial) dure environ 0,33 s, suite à quoi une phase éteinte d'une durée d'environ 0,33 s doit être observée.

Outre le respect de ces normes, cette séquence S1 a pour effet que le système 2 émet un faisceau lumineux résultant présentant une excellente homogénéité visuelle lors de son fonctionnement en tant que clignotant.

Par ailleurs, le dispositif de commande est adapté pour commander les premier et deuxième ensembles 28, 32 de sources lumineuses 30, 34 selon une deuxième séquence S2 au cours de laquelle :
- tout ou partie des sources lumineuses 30 du premier ensemble 28 sont séquentiellement allumées selon un deuxième ordre d'allumage prédéfini,
- la puissance lumineuse émise par tout ou partie des sources lumineuses 30 du premier ensemble 28 est diminuée à l'issue de l'allumage des sources lumineuses 30 du premier ensemble 28 selon le deuxième ordre d'allumage, et
- tout ou partie des sources lumineuses 34 du deuxième ensemble 32 sont allumées à l'issue de l'allumage des sources lumineuses 30 du premier ensemble 28 selon ledit deuxième ordre d'allumage.

A noter que la diminution de la puissance lumineuse émise par les sources lumineuses 30 est par exemple obtenue par la commande via le dispositif 50 d'une diminution de la puissance électrique fournie aux sources lumineuses 30.

Dans certains modes de réalisation, le deuxième ordre d'allumage correspond au premier ordre d'allumage.

De manière analogue à la première séquence S1, par exemple, la deuxième séquence S2 dure environ 0,33 s et est suivie d'une temporisation d'une durée d'environ 0,33 seconde au cours de laquelle le système 2 n'émet pas de lumière, suite à quoi cette séquence S2 est réitérée, ou bien la séquence S1 est réalisée, puis éventuellement réitérée ou alternée avec la deuxième séquence S2.

Cette deuxième séquence S2 a également pour effet que l'homogénéité visuelle du système 2 est très bonne lors de sa mise en œuvre en sus d'aboutir à une puissance lumineuse supérieure du fait qu'au moins une des sources lumineuses 30 du premier ensemble 28 demeure allumée à l'issue de la mise en œuvre du deuxième ordre d'allumage. La ou les sources lumineuses 30 correspondantes demeurent ainsi allumées jusqu'à la temporisation marquant la fin de la séquence S2.

Par ailleurs, le dispositif de commande est adapté pour commander les premier et deuxième ensembles 28, 32 de sources lumineuses 30, 34 selon une troisième séquence S3 au cours de laquelle :
- tout ou partie des sources lumineuses 30 du premier ensemble sont séquentiellement allumées selon un troisième ordre d'allumage prédéfini puis maintenues allumées, et
- tout ou partie des sources lumineuses du deuxième ensemble sont allumées à l'issue de l'allumage des sources lumineuses du premier ensemble selon ledit troisième ordre d'allumage.

Par exemple, cette séquence S3 obéit au même schéma temporel que la séquence S1, c'est-à-dire qu'elle est mise en œuvre sur une durée de 0,33 s puis est suivie d'une temporisation de 0,33 s.

Cette séquence S3 a pour effet d'augmenter plus avant la puissance lumineuse du faisceau lumineux émis par le système 2.

Par exemple, le troisième ordre d'allumage correspond au premier ordre d'allumage.

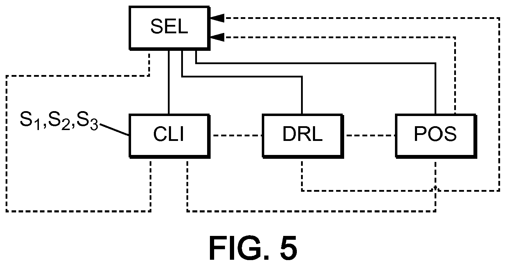

Un procédé de fonctionnement du système 2 va maintenant être décrit en référence à la Figure 5.

Initialement, par exemple lors de l'allumage du véhicule comprenant le système 2, lors d'une étape de sélection SEL, le dispositif de commande 50 détermine si un mode de fonctionnement du système 2 est à mettre en œuvre, et si oui, lequel. Cette détermination est par exemple réalisée en fonction de la détection de l'actionnement d'une commande actionnée par le conducteur et impliquant le système 2, ou encore d'une information fournie par un autre système du véhicule, telle qu'une information d'actionnement de feux de croisement du véhicule.

La commande en question est par exemple une commande d'éclairage de position, ou une commande d'indication de changement de direction impliquant le système 2. A noter que dans un tel cas de figure, le système 2 est associé à une seule des directions selon lesquelles le véhicule peut changer de direction, de sorte que l'actionnement de la commande en question peut ne pas impliquer le système 2. Cette commande se présente par exemple sous la forme d'un levier aux abords du volant que le conducteur déplace dans un sens donné afin de signifier son intention de changer la direction du véhicule selon une direction associée au sens de déplacement du levier.

Alternativement, la commande déclenchant la mise en œuvre de l'un ou plusieurs des modes de fonctionnement du système 2 se présente sous une forme quelconque telle qu'un bouton poussoir.

En réponse à cette détection, le module de commande 50 active le mode de fonctionnement correspondant du système 2.

Par exemple, lors d'une étape CLI, le système 2 opère selon le premier mode de fonctionnement dans lequel il réalise la fonction de clignotement lumineux.

Lors de cette étape, le module de commande 50 commande les premier et deuxième ensembles 28, 32 de sources lumineuses 30, 34 selon une ou plusieurs des séquences S1 à S3 successivement.

Parallèlement, le module de commande 50 commande l'allumage de tout ou partie des sources lumineuses 48 du troisième ensemble 46.

Lors de cette étape CLI, les sources lumineuses 30 du premier ensemble 28 rayonnent essentiellement à travers le guide de lumière 36. Ce passage au travers du guide de lumière 36 a pour effet d'homogénéiser la lumière émise par le premier sous-système 6, de sorte que le faisceau lumineux émis par le système 2 est plus homogène.

En cas de détection de l'actionnement d'une commande ou d'une information associée au déclenchement du deuxième mode de fonctionnement, le module de commande 50 commande la mise en œuvre du deuxième mode de fonctionnement d'éclairage diurne.

Lors d'une étape DRL subséquente, une ou plusieurs des sources lumineuses 34 du deuxième ensemble 32 adaptées pour émettre un faisceau lumineux blanc sont allumées, et rayonnent avec une première puissance lumineuse. La lumière ainsi émise se propage le long du guide de lumière 36 puis est déviée par les moyens de déviation 42, de sorte que les faisceaux émis par les sources lumineuses blanches sont visualisables selon la direction d'émission X.

En cas de détection de l'actionnement d'une commande ou d'une information associée au déclenchement du troisième mode de fonctionnement, le module de commande 50 commande la mise en œuvre du troisième mode de fonctionnement.

Lors d'une étape POS subséquente, une ou plusieurs des sources lumineuses 34B du deuxième ensemble de sources lumineuses aptes à émettre de la lumière de couleur blanche sont allumées pour émettre un faisceau présentant une deuxième intensité lumineuse inférieure à la première intensité lumineuse. Ceci est par exemple obtenu en alimentant les sources lumineuses 34B avec une deuxième puissance électrique inférieure à la première puissance électrique.

En cas de détection de l'actionnement d'une commande, de l'absence de détection d'une commande associée à au moins l'un des modes de fonctionnement ou d'une information associée à l'extinction du système 2, le module de commande 50 procède de nouveau à l'étape de sélection SEL.

A noter que, préférentiellement, seules les sources 34A de couleur ambre émettent dans le premier mode de fonctionnement, et seules des sources 34B blanches sont allumées dans le deuxième mode de fonctionnement.

D'autres modes de réalisation sont envisageables.

En particulier, dans certains modes de réalisation, le système 2 peut comprendre des moyens de diffusion de la lumière émise par le premier ensemble 28 de sources lumineuses 30 vers le guide de lumière. Ces moyens de diffusion comprennent par exemple des collimateurs ou des réflecteurs.

## Revendications

1. Système optique d'émission lumineuse pour véhicule automobile, ledit système optique comprenant :
- un premier sous-système (6) d'émission lumineuse comprenant un premier ensemble (28) de sources lumineuses (30) configuré pour émettre de la lumière, et
- un deuxième sous-système (8) d'émission lumineuse, comprenant un deuxième ensemble (32) de sources lumineuses (34) configuré pour émettre de la lumière et un guide de lumière (36) apte à diffuser hors du système optique ladite lumière du deuxième ensemble (32) de sources lumineuses,
- un dispositif de commande (50) des premier et deuxième ensembles (28, 32) de sources lumineuses (30, 34),
le guide de lumière (36) étant agencé en regard du premier ensemble (28) de sources lumineuses (32) de sorte que le premier ensemble (28) de sources lumineuses (30) rayonne essentiellement à travers ledit guide de lumière (36) hors du système optique ;
**caractérisé en ce que** le dispositif de commande (50) est adapté pour commander les premier et deuxième ensembles (28, 32) de sources lumineuses selon une première séquence (S1) dans laquelle tout ou partie des sources lumineuses (30) du premier ensemble (28) sont séquentiellement allumées selon un premier ordre d'allumage prédéfini puis éteintes, notamment simultanément, et tout ou partie des sources lumineuses (34) du deuxième ensemble (32) sont allumées en réponse à l'extinction, notamment à l'extinction simultanée, des sources lumineuses (30) du premier ensemble (28).

2. Système selon la revendication 1, **caractérisé en ce que** le guide de lumière (36) présente deux faces d'extrémité longitudinale (41A, 41B) séparées par au moins une face périphérique, l'une des faces d'extrémité longitudinale (41A) formant une face d'entrée de lumière associée au deuxième ensemble (32) de sources lumineuses (34), la lumière émise par le deuxième ensemble se propageant par réflexion interne totale dans le guide de lumière (36) jusqu'à une face de sortie de lumière (38E) du guide de lumière disposée sur ladite face périphérique et étant émise à travers ladite face de sortie de lumière.

3. Système selon la revendication 2, **caractérisé en ce que** le premier ensemble (28) de sources lumineuses s'étend en regard du guide de lumière (36) sensiblement le long de la face périphérique du guide de lumière, d'un côté du guide (38O) opposé à la face de sortie, le deuxième ensemble de sources lumineuses étant disposé à ladite face d'entrée de lumière.

4. Système selon la revendication 2 ou 3, **caractérisé en ce que** le deuxième sous-système (8) est agencé pour que, lorsque les sources lumineuses du deuxième ensemble émettent de la lumière, le faisceau émis via la face de sortie (38E) du guide de lumière réalise une fonction réglementaire d'indicateur de direction.

5. Système selon la revendication 4, **caractérisé en ce que** le premier sous-système est adapté pour réaliser une sous-fonction de la dite fonction d'indicateur de direction, ladite sous-fonction étant connue sous le nom de fonction traceur et consistant en un allumage séquentiel de plusieurs sources lumineuses se déroulant sur un intervalle de durée prédéfinie.

6. Système optique selon l'une quelconque des revendications précédentes, **caractérisé en ce que** le guide de lumière (36) comprend des moyens de déviation (42) configurés pour modifier la direction de propagation de la lumière émise par le deuxième ensemble (32) de sources lumineuses (34) et se propageant le long du guide de lumière.

7. Système optique selon la revendication 6, **caractérisé en ce que** le premier ensemble (28) de sources lumineuses (30) est configuré pour émettre de la lumière selon une direction principale d'émission (X), les moyens de déviation (42) étant configurés pour réorienter la lumière émise par le deuxième ensemble de sources lumineuses se propageant le long du guide de lumière (36) sensiblement selon ladite direction principale d'émission (X).

8. Système optique selon la revendication 6 ou 7, **caractérisé en ce que** les moyens de déviation (42) comprennent des prismes de déviation (44) formés sur une surface du guide de lumière (36) ou dans l'épaisseur du guide de lumière (36).

9. Système optique selon l'une quelconque des revendications précédentes, comprenant un boîtier délimitant une cavité (26) ouverte, le boîtier comprenant une portion (12) sur laquelle le premier ensemble (28) de sources lumineuses (30) est agencée de sorte que ledit premier ensemble (28) de sources lumineuses (30) soit situé en regard d'une ouverture de la cavité (26).

10. Système optique selon la revendication 9, **caractérisé en ce qu'**il comprend en outre une glace de fermeture (10) diffusante obturant ladite cavité (26).

11. Système optique selon l'une des revendications précédentes, **caractérisé en ce qu'**il comprend en outre au moins une source lumineuse (48) déportée par rapport au guide de lumière de sorte que la ou chaque dite source lumineuse ne rayonne pas essentiellement à travers ledit guide de lumière (36).

12. Système optique selon l'une quelconque des revendications précédentes, **caractérisé en ce que** le dispositif de commande (50) est adapté pour commander les premier et deuxième ensembles (28, 32) de sources lumineuses selon une deuxième séquence (S2) dans laquelle :
- tout ou partie des sources lumineuses (30) du premier ensemble (28) sont séquentiellement allumées selon un deuxième ordre d'allumage prédéfini,
- la puissance lumineuse émise par tout ou partie des sources lumineuses (30) du premier ensemble est diminuée à l'issue de l'allumage des sources lumineuses du premier ensemble (30) selon ledit deuxième ordre d'allumage, et
- tout ou partie des sources lumineuses (34) du deuxième ensemble (32) sont allumées à l'issue de l'allumage des sources lumineuses (30) du premier ensemble (28) selon ledit deuxième ordre d'allumage.

13. Système optique selon l'une quelconque des revendications précédentes, **caractérisé en ce que** le dispositif de commande (50) est adapté pour commander les premier et deuxième ensembles (28, 32) de sources lumineuses (30, 34) selon une troisième séquence (S3) dans laquelle :
- tout ou partie des sources lumineuses (30) du premier ensemble (28) sont séquentiellement allumées selon un troisième ordre d'allumage prédéfini, et
- tout ou partie des sources lumineuses (34) du deuxième ensemble (32) sont allumées à l'issue de l'allumage des sources lumineuses (30) du premier ensemble (28) selon ledit troisième ordre d'allumage.

14. Système selon l'une quelconque des revendications précédentes, **caractérisé en ce que** le deuxième ensemble (32) de sources lumineuses (34) du deuxième sous-système (8) comprend une ou plusieurs sources lumineuses aptes à émettre de la lumière de couleur blanche.

15. Système optique selon la revendication 14, **caractérisé en ce qu'**il présente un premier mode de fonctionnement dans lequel le système optique (2) réalise une fonction de clignotement lumineux, et un deuxième mode de fonctionnement d'éclairage diurne, dans lequel une ou plusieurs desdites sources lumineuses (34) du deuxième ensemble (32) de sources lumineuses aptes à émettre de la lumière de couleur blanche sont allumées.

16. Système optique selon la revendication 15, **caractérisé en ce que** dans le deuxième mode de fonctionnement, une ou plusieurs desdites sources lumineuses (34B) du deuxième ensemble de sources lumineuses aptes à émettre de la lumière de couleur blanche sont allumées pour émettre un faisceau présentant une première intensité lumineuse, par exemple en étant alimentées avec une première puissance électrique, le système optique d'émission lumineuse (2) comprenant un troisième mode de fonctionnement d'éclairage de position, dans lequel une ou plusieurs desdites sources lumineuses (34B) du deuxième ensemble de sources lumineuses aptes à émettre de la lumière de couleur blanche sont allumées pour émettre un faisceau présentant une deuxième intensité lumineuse inférieure à la première intensité lumineuse, par exemple en étant alimentées avec une deuxième puissance électrique inférieure à la première puissance électrique.

## Patentansprüche

1. Optisches Lichtabgabesystem für ein Kraftfahrzeug, das optische System umfassend:
- ein erstes Lichtabgabe-Untersystem (6) umfassend eine erste Anordnung (28) von Lichtquellen (30), die dazu ausgebildet ist, Licht abzugeben, und
- ein zweites Lichtabgabe-Untersystem (8), umfassend eine zweite Anordnung (32) von Lichtquellen (34), die dazu ausgebildet ist, Licht abzugeben, und einen Lichtleiter (36), der geeignet ist, das Licht der zweiten Anordnung (32) von Lichtquellen aus dem optischen System zu streuen,
- eine Steuerungsvorrichtung (50) der ersten und zweiten Anordnung (28, 32) von Lichtquellen (30, 34),
wobei der Lichtleiter (36) gegenüber der ersten Anordnung (28) von Lichtquellen (32) angeordnet ist, so dass die erste Anordnung (28) von Lichtquellen (30) im Wesentlichen durch den Lichtleiter (36) aus dem optischen System strahlt;
**dadurch gekennzeichnet, dass** die Steuerungsvorrichtung (50) geeignet ist, die erste und zweite Anordnung (28, 32) von Lichtquellen gemäß einer ersten Sequenz (S1) zu steuern, bei welcher die gesamten oder ein Teil der Lichtquellen (30) der ersten Anordnung (28) sequentiell gemäß einer ersten vorgegebenen Einschaltreihenfolge eingeschaltet, dann ausgeschaltet werden, insbesondere gleichzeitig, und die gesamten oder ein Teil der Lichtquellen (34) der zweiten Anordnung (32) in Reaktion auf die Ausschaltung, insbesondere die gleichzeitige Ausschaltung, der Lichtquellen (30) der ersten Anordnung (28) eingeschaltet werden.

2. System nach Anspruch 1, **dadurch gekennzeichnet, dass** der Lichtleiter (36) zwei Längsendflächen (41A, 41B) aufweist, die durch mindestens eine Umfangsfläche getrennt sind, wobei eine der Längsendflächen (41A) eine Lichteintrittsfläche bildet, die der zweiten Anordnung (32) von Lichtquellen (34) zugeordnet ist, wobei sich das Licht, das von der zweiten Anordnung abgegeben wird, durch interne Totalreflexion im Lichtleiter (36) bis zu einer Lichtsaustrittsfläche (38E) des Lichtleiters ausbreitet, die auf der Umfangsfläche angeordnet ist, und durch die Lichtsaustrittsfläche abgegeben wird.

3. System nach Anspruch 2, **dadurch gekennzeichnet, dass** sich die erste Anordnung (28) von Lichtquellen gegenüber des Lichtleiters (36) im Wesentlichen entlang der Umfangsfläche des Lichtleiters auf einer Seite des Leiters (38O), die der Austrittsfläche gegenüber liegt, erstreckt, wobei die zweite Anordnung von Lichtquellen an der Lichteintrittsfläche angeordnet ist.

4. System nach Anspruch 2 oder 3, **dadurch gekennzeichnet, dass** das zweite Untersystem (8) so angeordnet ist, dass, wenn die Lichtquellen der zweiten Anordnung Licht abgeben, das Bündel, das über die Austrittsfläche (38E) des Lichtleiters abgegeben wird, eine vorschriftsmäßige Richtungsanzeigerfunktion ausführt.

5. System nach Anspruch 4, **dadurch gekennzeichnet, dass** das erste Untersystem geeignet ist, eine Unterfunktion der Richtungsanzeigerfunktion auszuführen, wobei die Unterfunktion unter dem Namen Tracer-Funktion bekannt ist und aus einer sequentiellen Einschaltung mehrerer Lichtquellen besteht, die über ein Intervall vorgegebener Dauer stattfindet.

6. Optisches System nach einem der vorhergehenden Ansprüche, **dadurch gekennzeichnet, dass** der Lichtleiter (36) Umleitmittel (42) umfasst, die dazu ausgebildet sind, die Ausbreitungsrichtung des Lichts zu ändern, das von der zweiten Anordnung (32) von Lichtquellen (34) abgegeben wird und sich entlang dem Lichtleiter ausbreitet.

7. Optisches System nach Anspruch 6, **dadurch gekennzeichnet, dass** die erste Anordnung (28) von Lichtquellen (30) dazu ausgebildet ist, Licht in einer Hauptabgaberichtung (X) abzugeben, wobei die Umleitmittel (42) dazu ausgebildet sind, das Licht, das von der zweiten Anordnung von Lichtquellen abgegeben wird, das sich entlang dem Lichtleiter (36) ausbreitet, im Wesentlichen in die Hauptabgaberichtung (X) umzuorientieren.

8. Optisches System nach Anspruch 6 oder 7, **dadurch gekennzeichnet, dass** die Umleitmittel (42) Umleitprismen (44) umfassen, die auf einer Fläche des Lichtleiters (36) oder in der Dicke des Lichtleiters (36) ausgebildet sind.

9. Optisches System nach einem der vorhergehenden Ansprüche, umfassend ein Gehäuse, das einen offenen Hohlraum (26) begrenzt, das Gehäuse umfassend einen Abschnitt (12), auf dem die erste Anordnung (28) von Lichtquellen (30) so angeordnet ist, dass sich die erste Anordnung (28) von Lichtquellen (30) gegenüber einer Öffnung des Hohlraums (26) befindet.

10. Optisches System nach Anspruch 9, **dadurch gekennzeichnet, dass** es ferner eine streuende Verschlussscheibe (10) umfasst, die den Hohlraum (26) verschließt.

11. Optisches System nach einem der vorhergehenden Ansprüche, **dadurch gekennzeichnet, dass** es ferner mindestens eine Lichtquelle (48) umfasst, die bezogen auf den Lichtleiter versetzt ist, so dass die oder jede der Lichtquellen im Wesentlichen nicht durch den Lichtleiter (36) strahlt.

12. Optisches System nach einem der vorhergehenden Ansprüche, **dadurch gekennzeichnet, dass** die Steuerungsvorrichtung (50) geeignet ist, die erste und zweite Anordnung (28, 32) von Lichtquellen gemäß einer zweiten Sequenz (S2) zu steuern, wobei:
- die gesamten oder ein Teil der Lichtquellen (30) der ersten Anordnung (28) sequentiell gemäß einer zweiten vorgegebenen Einschaltreihenfolge eingeschaltet werden,
- die Lichtleistung, die von den gesamten oder einem Teil der Lichtquellen (30) der ersten Anordnung abgegeben wird, nach dem Einschalten der Lichtquellen der ersten Anordnung (30) gemäß der zweiten Einschaltreihenfolge verringert wird, und
- die gesamten oder ein Teil der Lichtquellen (34) der zweiten Anordnung (32) nach dem Einschalten der Lichtquellen (30) der ersten Anordnung (28) gemäß der zweiten Einschaltreihenfolge eingeschaltet werden.

13. Optisches System nach einem der vorhergehenden Ansprüche, **dadurch gekennzeichnet, dass** die Steuerungsvorrichtung (50) geeignet ist, die erste und zweite Anordnung (28, 32) von Lichtquellen (30, 34) gemäß einer dritten Sequenz (S3) zu steuern, wobei:
- die gesamten oder ein Teil der Lichtquellen (30) der ersten Anordnung (28) sequentiell gemäß einer dritten vorgegebenen Einschaltreihenfolge eingeschaltet werden, und
- die gesamten oder ein Teil der Lichtquellen (34) der zweiten Anordnung (32) nach dem Einschalten der Lichtquellen (30) der ersten Anordnung (28) gemäß der dritten Einschaltreihenfolge eingeschaltet werden.

14. System nach einem der vorhergehenden Ansprüche, **dadurch gekennzeichnet, dass** die zweite Anordnung (32) von Lichtquellen (34) des zweiten Untersystems (8) eine oder mehrere Lichtquellen umfasst, die geeignet sind, weißes Licht abzugeben.

15. Optisches System nach Anspruch 14, **dadurch gekennzeichnet, dass** es einen ersten Betriebsmodus, in welchem das optische System (2) eine Lichtblinkfunktion ausführt, und einen zweiten Betriebsmodus für Tagbeleuchtung, in welchem eine oder mehrere der Lichtquellen (34) der zweiten Anordnung (32) von Lichtquellen, die geeignet sind, weißes Licht abzugeben, eingeschaltet sind, aufweist.

16. Optisches System nach Anspruch 15, **dadurch gekennzeichnet, dass** im zweiten Betriebsmodus eine oder mehrere der Lichtquellen (34B) der zweiten Anordnung von Lichtquellen, die geeignet sind, weißes Licht abzugeben, eingeschaltet sind, um ein Bündel abzugeben, das eine erste Lichtstärke aufweist, zum Beispiel indem sie mit einer ersten elektrischen Leistung versorgt werden, das optische Lichtabgabesystem (2) umfassend einen dritten Betriebsmodus zur Positionsbeleuchtung, wobei eine oder mehrere der Lichtquellen (34B) der zweiten Anordnung von Lichtquellen, die geeignet sind, weißes Licht abzugeben, eingeschaltet sind, um ein Bündel abzugeben, das eine zweite Lichtstärke aufweist, die niedriger als die erste Lichtstärke ist, zum Beispiel indem sie mit einer zweiten elektrischen Leistung versorgt werden, die niedriger als die erste elektrische Leistung ist.

## Claims

1. Optical light emission system for a motor vehicle, said optical system comprising:
- a first light emission subsystem (6) comprising a first set (28) of light sources (30) configured to emit light, and
- a second light emission subsystem (8) comprising a second set (32) of light sources (34) configured to emit light and a light guide (36) able to diffuse said light from the second set (32) of light sources outside the optical system,
- a control device (50) for the first and second sets (28, 32) of light sources (30, 34),
wherein the light guide (36) is arranged facing the first set (28) of light sources (32) such that the first set (28) of light sources (30) radiates substantially through said light guide (36) outside the optical system;
**characterized in that** the control device (50) is adapted to control the first and second sets (28, 32) of light sources in a first sequence (S1) in which all or some of the light sources (30) of the first set (28) are illuminated sequentially in a first predefined order of illumination and then extinguished, in particular simultaneously, and all or some of the light sources (34) of the second set (32) are illuminated in response to the extinction, in particular the simultaneous extinction, of the light sources (30) of the first set (28).

2. System according to claim 1, **characterized in that** the light guide (36) has two longitudinal end faces (41A, 41B) separated by at least one peripheral face, the one of the longitudinal end faces (41A) forming a light entry face associated with the second set (32) of light sources (34), the light emitted by the second set propagating by total internal reflection in the light guide (36) up to a light outlet face (38E) of the light guide arranged on said peripheral face and being emitted through said light outlet face.

3. System according to claim 2, **characterized in that** the first set (28) of light sources extends facing the light guide (36) substantially along the peripheral face of the light guide, from a side of the guide (38O) opposite the outlet face, the second set of light sources being arranged at said light entry face.

4. System according to claim 2 or 3, **characterized in that** the second subsystem (8) is arranged such that when the light sources of the second set emit light, the beam emitted via the outlet face (38E) of the light guide performs a legally required function of direction indication.

5. System according to claim 4, **characterized in that** the first subsystem is adapted to perform a subfunction of said direction indication function, said subfunction being known as a tracer function and consisting of sequential illumination of a plurality of light sources taking place over an interval of predefined duration.

6. Optical system according to any of the preceding claims, **characterized in that** the light guide (36) comprises diversion means (42) configured to modify the direction of propagation of the light emitted by the second set (32) of light sources which propagates along the light guide.

7. Optical system according to claim 6, **characterized in that** the first set (28) of light sources (30) is configured to emit light in a main emission direction (X), the diversion means (42) being configured to re-orient the light emitted by the second set of light sources which propagates along the light guide (36) substantially in said main emission direction (X).

8. Optical system according to claim 6 or 7, **characterized in that** the diversion means (42) comprise diversion prisms (44), formed on a surface of said light guide (36) or in the thickness of the light guide (36).

9. Optical system according to any of the preceding claims, comprising a housing delimiting an open cavity (26), the housing comprising a portion (12) on which the first set (28) of light sources (30) is arranged such that said first set (28) of light sources (30) is situated facing an opening of the cavity (26).

10. Optical system according to claim 9, **characterized in that** it also comprises a closing diffusing lens (10) sealing said cavity (26).

11. Optical system according to any of the preceding claims, **characterized in that** it also comprises at least one light source (48) offset relative to the light guide such that the or each said light source does not radiate substantially through said light guide (36).

12. Optical system according to any of the preceding claims, **characterized in that** the control device (50) is adapted to control the first and second sets (28, 32) of light sources in a second sequence (S2) in which:
- all or some of the light sources (30) of the first set (28) are illuminated sequentially in a second predefined order of illumination,
- the light power emitted by all or some of the light sources (30) of the first set is reduced after the illumination of the light sources (30) of the first set, in said second order of illumination, and
- all or some of the light sources (34) of the second set (32) are illuminated after the illumination of the light sources (30) of the first set (28), in said second order of illumination.

13. Optical system according to any of the preceding claims, **characterized in that** the control device (50) is adapted to control the first and second sets (28, 32) of light sources (30, 34) in a third sequence (S3) in which:
- all or some of the light sources (30) of the first set (28) are illuminated sequentially in a third predefined order of illumination, and
- all or some of the light sources (34) of the second set (32) are illuminated after the illumination of the light sources (30) of the first set (28), in said third order of illumination.

14. System according to any of the preceding claims, **characterized in that** the second set (32) of light sources (34) of the second subsystem (8) comprises one or more light sources able to emit white-coloured light.

15. Optical system according to claim 14, **characterized in that** it has a first operating mode in which the optical system (2) performs the function of flashing lighting, and a second operating mode of daytime running lighting in which one or more of said light sources (34) of the second set (32) of light sources able to emit white-coloured light are illuminated.

16. Optical system according to claim 15, **characterized in that** in the second operating mode, one or more of said light sources (34B) of the second set of light sources able to emit white-coloured light are illuminated to emit a beam with a first light intensity, for example when supplied with a first electrical power, the optical light emission system (2) comprising a third operating mode of position lighting, in which one or more of said light sources (34B) of the second set of light sources able to emit white-coloured light are illuminated to emit a beam with a second light intensity lower than the first light intensity, for example when supplied with a second electrical power lower than the first electrical power.
